(19) **Europäisches Patentamt**

**European Patent Office**

**Office européen des brevets**

(11) **EP 1 270 349 B1**

(12) **FASCICULE DE BREVET EUROPEEN**

(45) Date de publication et mention
de la délivrance du brevet:
**17.05.2006 Bulletin 2006/20**

(51) Int Cl.:
**B60R 25/04** (2006.01)

(21) Numéro de dépôt: **02013023.3**

(22) Date de dépôt: **13.06.2002**

(54) **Système d'autorisation du démarrage d'un véhicule automobile**

Startberechtigungssystem eines Kraftfahrzeugs

System for starting authorization for a motor vehicle

(84) Etats contractants désignés:
**DE ES FR GB IT**

(30) Priorité: **19.06.2001 FR 0108368**

(43) Date de publication de la demande:
**02.01.2003 Bulletin 2003/01**

(73) Titulaire: **VALEO SECURITE HABITACLE S.A.S.**
**94042 Créteil Cédex (FR)**

(72) Inventeur: **Barbulescu, Virgil**
**60650 Saint Aubin en Bray (FR)**

(74) Mandataire: **Rosolen-Delarue, Katell**
**Valeo Securité Habitacle,**
**Service Propriété Industrielle,**
**42, rue Le Corbusier - Europarc**
**94042 Creteil Cedex (FR)**

(56) Documents cités:
**WO-A-01/08942**     **WO-A-99/36295**
**DE-A- 19 839 478**     **FR-A- 2 755 925**

## Description

La présente invention concerne un système d'autorisation du démarrage d'un véhicule automobile.

Un système selon le préambule de la revendication 1 est connu dans le document WO 00/11292.

On connaît des systèmes d'autorisation du démarrage d'un véhicule de type « mains-libres». Ces systèmes comportent un dispositif d'identification embarqué d'un utilisateur apte à échanger des données d'identification selon une communication « active » avec une unité d'identification portée par un utilisateur.

Le mode de communication d'un système mains-libres est dit «actif» quand l'unité d'identification portée par l'utilisateur possède une source d'énergie, par exemple une pile, lui permettant d'émettre des données d'identification sur une distance de plusieurs mètres.

Le dispositif d'identification embarqué « mains-libres» du système d'autorisation du démarrage envoie, en basse fréquence, un signal de réveil et des données d'identification vers l'unité d'identification après réception d'une requête envoyée par le véhicule suite à l'avènement d'une action ou la détection d'un état spécifique du véhicule, par exemple à chaque fois que l'une des portières du véhicule s'ouvre ou lorsque l'utilisateur appuie sur le bouton de démarrage. L'unité d'identification décrypte les données d'identification reçues et envoie en radio-fréquence, des données d'identification de réponse. Si les données d'identification de réponse sont reconnues, le système de sécurité antivol est désactivé sans action volontaire de l'utilisateur.

Classiquement, un dispositif de secours mécanique ou électronique est associé au système de type « mains-libres» pour que, en cas de défaillance de l'unité d'identification, par exemple pour une pile vide, le véhicule puisse tout de même démarrer. Généralement, la désactivation du système antivol est assurée par un système de secours de type « transpondeur» aussi appelé de type « immobilisation ».

Un système d'immobilisation comprend classiquement un circuit d'immobilisation disposé au niveau de la colonne de direction ou dans le tableau de bord et apte à communiquer avec un transpondeur.

Le mode de communication d'un système d'immobilisation est communément appelé « passif ». En effet, le transpondeur porté par l'utilisateur ne possède pas de source d'énergie propre mais est chargé en énergie par le système d'immobilisation. En conséquence, la portée du champ émis par le système de type « immobilisation » est plus faible que la portée du champ émis par le système de type « mains-libres ». Généralement, le système de type « immobilisation» présente une portée de quelques centimètres uniquement. Pour cette raison l'utilisateur doit positionner le transpondeur à un emplacement précis proche de l'antenne d'émission du système de type « immobilisation » pour désactiver ce système.

Dans le domaine de la sécurité d'accès à un véhicule automobile, on considère généralement que les systèmes d'autorisation du démarrage de type « immobilisation » sont plus fiables que les systèmes d'autorisation du démarrage de type « mains-libres», notamment parce que l'échange de données de reconnaissance se fait en basse fréquence et à distance faible entre l'antenne et le transpondeur ce qui minimise les risques de brouillage par un champ extérieur.

Toutefois, les systèmes « mains-libres » sont mieux perçus par les utilisateurs car ils augmentent considérablement leur confort. En effet, si l'utilisateur porte l'unité d'identification sur lui, le système d'accès désactive la sécurité antivol, par exemple, quand l'utilisateur pénètre dans le véhicule ou appuie sur le bouton de démarrage et cela de manière transparente, c'est-à-dire sans que celui-ci ait besoin de positionner un objet, tel que le transpondeur dans un emplacement précis.

Or, le coût de revient des systèmes mains-libres doublés d'un système d'immobilisation agissant comme un système de secours en cas de défaillance du système mains libres, est élevé.

Le but de la présente invention est de fournir un système d'autorisation du démarrage de type «mains-libres» plus économique que les systèmes actuels, mais qui possède tout de même un dispositif de secours de type « immobilisation ».

A cet effet, l'invention a pour objet un système d'autorisation du démarrage d'un véhicule automobile tel que défini dans la revendication 1.

Ainsi, avantageusement, la même antenne d'émission et, éventuellement, le même étage amplificateur sont utilisés dans un mode de fonctionnement classique, à savoir en mode de communication actif ou « mains-libres» et en mode de fonctionnement de secours, à savoir le mode de communication passif, ce qui permet de simplifier la construction du dispositif et d'en réduire le prix de revient.

Le système selon l'invention peut comporter en outre une ou plusieurs des caractéristiques suivantes :

- les moyens d'adaptation électroniques sont aptes à faire varier l'intensité crête dans au moins une antenne d'émission de manière à modifier la portée du champ magnétique émis en fonction du mode de communication actif ou passif défini ;
- les moyens d'adaptation électroniques comportent au moins un module de traitement des données, ledit module de traitement des données comprenant un composant électronique de fourniture de données d'identification et un étage amplificateur d'émission, ledit composant électronique fournissant audit étage amplificateur d'émission des données d'identification pour la communication active avec l'unité d'identification et pour la communication passive avec le transpondeur ;
- les moyens d'adaptation électronique comportent une première et une deuxième antennes d'émission disposées entre l'étage amplificateur d'émission et la masse ; et une connexion de dérivation disposée aux bornes de la deuxième antenne, ladite connexion étant pourvue d'un commutateur commandé par un composant électronique pour basculer d'un mode de communication actif à un mode de communication passif;

- les moyens d'adaptation électronique comportent une première et une deuxième capacités disposées entre l'étage amplificateur d'émission et la masse ; et une connexion de dérivation disposée aux bornes de la deuxième capacité ; ladite connexion étant pourvue d'un commutateur commandé par un composant électronique pour basculer d'un mode de communication actif à un mode de communication passif;

- les moyens d'adaptation électroniques comportent un élément à résistance variable disposé entre l'étage amplificateur d'émission et l'antenne d'émission pour faire varier l'intensité crête dans l'antenne d'émission ;

- les moyens d'adaptation électroniques comportent un commutateur disposé entre l'antenne d'émission et au moins un premier et un second modules de traitement des données, le premier et le second modules de traitement des données fournissant à l'antenne d'émission des données d'identification respectivement pour la communication active avec l'unité d'identification et pour la communication passive avec le transpondeur ;

- le module de traitement des données est apte à faire varier le rapport cyclique de la tension d'alimentation de l'antenne d'émission pour faire varier la portée du champ électromagnétique émis en fonction du mode de communication défini ;

- le dispositif d'identification embarqué comporte une alimentation en énergie de l'antenne d'émission possédant une tension variable, connectée aux moyens d'adaptation électroniques, ladite alimentation pouvant commuter entre une première et une seconde tensions pour faire varier la portée du champ électromagnétique émis en fonction du mode de communication défini;

- le dispositif d'identification embarqué comprend un moyen de basculement de la communication entre le mode de communication actif et le mode de communication passif, le moyen de basculement étant apte à communiquer aux moyens d'adaptation électroniques le changement de mode communication ;

- le moyen de basculement est apte à actionner le commutateur ;

- le moyen de basculement de la communication comporte un bouton de manoeuvre pouvant être actionné par l'utilisateur du véhicule ;

- le moyen de basculement est le bouton de démarrage du véhicule ;

- le moyen de basculement de la communication comporte un capteur de présence d'un objet au niveau d'un emplacement prédéfini et le dispositif d'identification embarqué bascule à un mode de communication passif lorsque la présence du transpondeur est détectée ;

- l'étendue de la zone de détection dudit capteur de présence est sensiblement confondue avec la portée d'émission de l'antenne d'émission émettant en mode de communication passif, de sorte que le dispositif d'identification embarqué ne bascule à une communication passive que lorsque le transpondeur est disposé au niveau de l'emplacement prédéfini ;

- le capteur de présence est disposé à proximité de l'antenne d'émission ;

- l'antenne d'émission et/ou le capteur de présence sont positionnés au niveau de la colonne de direction d'un véhicule automobile ;

- l'antenne d'émission et/ou le capteur de présence sont positionnés au niveau d'une console centrale d'un véhicule automobile ;

- le dispositif d'identification embarqué bascule de façon intermittente, sans action volontaire de l'utilisateur, d'un mode de communication actif à un mode de communication passif;

- la durée du mode de communication actif est de trois à six fois plus longue que la durée du mode de communication passif.

- l'unité d'identification et le transpondeur sont logés dans un badge unique ;

- le dispositif d'identification embarqué comporte au moins deux antennes d'émission et, en mode de communication passif, une seule antenne d'émission est sous tension, les autres antennes étant inhibées.

L'invention sera mieux comprise au cours de la description explicative détaillée qui va suivre en référence aux figures annexées sur lesquelles :

- la figure 1 représente un système d'autorisation du démarrage, selon un premier mode de réalisation de la présente invention,

- la figure 2 représente un système d'autorisation du démarrage, selon un deuxième mode de réalisation de l'invention,

- la figure 3 représente un système d'autorisation du démarrage, selon un troisième mode de réalisation de la présente invention.

- La figure 4 représente de façon schématique un graphe de l'intensité traversant une antenne d'émission en fonction de la fréquence émise par le dispositif d'identification embarqué selon le troisième mode de réalisation de la présente invention.

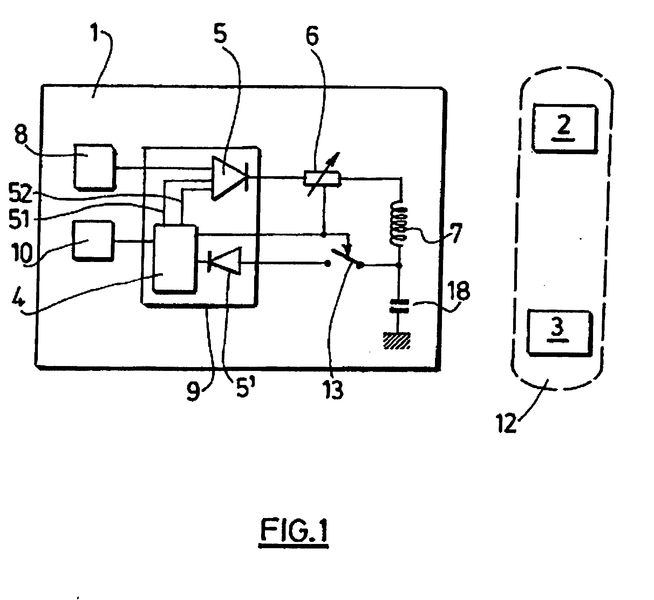

La figure 1 représente un système d'autorisation du démarrage d'un véhicule automobile selon un premier mode de réalisation de la présente invention. Le système d'accès comporte un dispositif d'identification embarqué 1 classiquement placé dans l'habitacle du véhicule automobile ainsi qu'une unité d'identification 2 et un transpondeur 3 portés par un utilisateur. De préférence l'unité 2 et le transpondeur 3 sont logés dans un même support 12, par exemple en forme de badge ou de boîtier de clé.

Dans un mode de fonctionnement classique, le système d'autorisation du démarrage échange des données en mode de communication « mains-libres » ou actif avec l'unité d'identification 2.

Si, après un échange de données, l'unité d'identification 2 est reconnue comme une unité autorisée à démarrer le véhicule, le système antivol du véhicule est automatiquement désactivé.

En cas de panne de l'unité d'identification 2 ou sur demande de l'utilisateur, le dispositif d'identification embarqué 1, selon la présente invention, peut basculer dans un mode de communication passif avec le transpondeur 3.

Pour cela, le dispositif d'identification embarqué comprend un module 9 de traitement des données commandé par un moyen de basculement 10 et alimenté par une alimentation en tension 8.

Le module de traitement des données 9 comporte un composant électronique 4 connecté, d'une part, à un étage amplificateur d'émission 5 généralement appelé « driver » d'émission et, d'autre part, à un étage amplificateur de réception 5'.

Le composant électronique 4 comporte une première mémoire contenant des données d'identification « mains-libres » pour une communication active avec l'unité d'identification 2 et une seconde mémoire contenant des données d'identification « immobilisation » pour une communication passive avec le transpondeur 3. Il est également possible que le composant électronique 4 reçoive les données d'identification d'un module électronique du véhicule.

Le composant électronique 4 transmet à l'étage amplificateur d'émission 5 les données d'identification « mains- libres » par une première ligne de communication 51, et les données d'identification « immobilisation » par une seconde ligne de communication 52.

En variante, il est possible de prévoir que la première ligne de communication 51 est destinée à la transmission des données d'identification « mains-libres » et « immobilisation » et que la seconde ligne de communication 52 est destinée à la transmission d'une information concernant le type de données d'identification « mains-libres » ou « immobilisation » transmise par la première ligne de communication.

En cas d'identification positive, le composant électronique 4 transmet un signal d'autorisation pour désactiver le système antivol de l'accès au démarrage du véhicule.

L'étage amplificateur d'émission 5 transmet sous forme d'impulsions les données d'identification à une antenne d'émission 7. Un élément à résistance variable 6 à deux valeurs est prévu entre l'étage amplificateur d'émission 5 et l'antenne d'émission 7. La valeur de la résistance de cet élément à résistance variable 6 est commandée par le composant électronique 4 en fonction du mode de communication actif ou passif défini par le moyen de basculement 10. Cet élément à résistance variable 6 permet de faire varier l'intensité crête dans l'antenne de manière à modifier la portée du champ magnétique émis.

En variante, l'élément à résistance variable 6 peut également être positionné entre la capacité 18 et la masse.

Un interrupteur 13 est éventuellement prévu entre la bobine d'émission 7 et l'étage amplificateur de réception 5' car ce dernier n'est pas nécessaire en mode de communication actif.

Ainsi, lorsque le système d'autorisation du démarrage fonctionne en mode de communication actif, la valeur de l'élément à résistance variable est faible et la portée du champ magnétique émis est de l'ordre de quelques mètres. Dans ce cas, le composant électronique fournit à l'antenne d'émission des données d'identification de type « mains-libres» et l'interrupteur 13 est fermé.

Sur commande du moyen de basculement 10, le dispositif d'identification embarqué 1 bascule en mode de communication passif. Le composant électronique 4 transmet des données d'émission de type « immobilisation », ouvre l'interrupteur 13 et augmente la valeur de l'élément à résistance variable, de telle sorte que la portée du champ magnétique émis correspond à la portée d'un circuit immobilisateur classique, à savoir 2 à 3 centimètres.

Grâce à l'objet de la présente invention, la même antenne d'émission et éventuellement le même étage en amplification 5 sont utilisés pour les modes de communication actif et passif, ce qui constitue un gain important de place, de coût de revient et de composants.

Le moyen de basculement 10 peut comporter un bouton de manoeuvre, de sorte que lorsque la communication entre le dispositif d'identification embarqué 1 et l'unité d'identification 2 ne peut plus être établie, l'utilisateur actionne ce bouton et présente le transpondeur à une distance de quelques centimètres de l'antenne d'émission.

Le moyen de basculement 10 peut être le bouton de démarrage du véhicule. Ainsi, si le véhicule ne démarre pas immédiatement lorsque le conducteur actionne le bouton de démarrage, celui-ci présente le transpondeur à quelques centimètres de l'antenne d'émission. Le système d'autorisation du démarrage bascule en mode de communication passif et autorise le démarrage si le transpondeur est reconnu.

L'antenne d'émission peut par exemple être située au niveau du bouton de démarrage, au niveau de la colonne de direction, sur le tableau de bord, au niveau de la console centrale ou à côté du levier de vitesse.

Selon une variante plus évoluée, le moyen de basculement 10 comporte un capteur de présence, qui commande le basculement de la communication lorsque la présence du transpondeur est détectée.

Avantageusement, ce capteur de présence possède une zone de détection dont l'étendue est environ égale à la portée d'émission de l'antenne d'émission 7 lorsqu'elle fonctionne en mode de communication passif de sorte que le dispositif d'identification embarqué ne bascule en mode passif que lorsque le transpondeur est disposé dans un environnement précis. Ce qui permet d'éviter les basculements intempestifs à un mode de communication passif.

Selon une autre variante (non représentée), le dispositif d'identification embarqué 1 comporte un moyen de basculement automatisé. Il émet constamment des données d'identification selon un mode de communication passif ou selon un mode de communication actif. Dans ce cas, le moyen de basculement bascule successivement, par intermittence, d'un mode de communication actif à un mode de communication passif sans action volontaire de l'utilisateur.

Avantageusement, le dispositif d'identification embarqué envoie de un à six messages de données d'identification « mains-libres » en mode de communication actif avant d'envoyer un message en mode de communication « passif ».

Selon une autre variante du premier mode de réalisation, le module de traitement des données 9 fait varier de façon connue en soi le rapport cyclique de la tension d'alimentation de l'antenne d'émission 7 pour faire varier la portée du champ électromagnétique émis par l'antenne.

Le système d'accès, selon cette variante, peut fonctionner avec ou sans l'élément à résistance variable 6 commandé par le composant électronique 4.

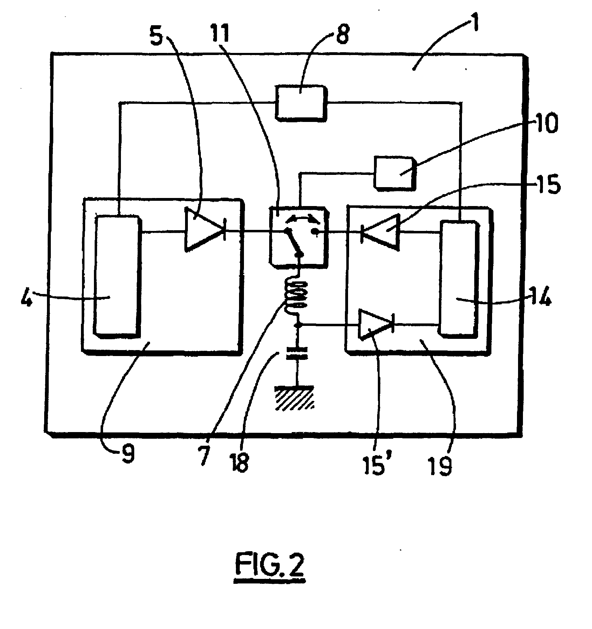

Selon un second mode de réalisation de l'invention représenté sur la figure 2, le dispositif d'identification embarqué 1 comporte un premier 9 et un second 19 modules de traitement, connectés à l'alimentation 8 et à une antenne d'émission 7 par l'intermédiaire d'un commutateur 11.

Le premier module de traitement 9 comporte un composant électronique 4 et un étage d'amplification d'émission 5. Le composant électronique 4 transmet à l'étage d'amplification d'émission 5 des données d'identification de type « mains-libres».

Le second module de traitement 19 comporte un composant électronique 14, un étage d'amplification d'émission 15, et un étage d'amplification de réception 15'. Le composant électronique 14 transmet à l'étage d'amplification d'émission 15 des données d'identification de type « immobilisation».

Dans une première position du commutateur 11, représentée sur la figure 2, l'antenne d'émission 7 est connectée au premier 9 module de traitement et le dispositif d'identification embarqué fonctionne en mode de communication actif.

Dans une seconde position du commutateur 11, l'antenne d'émission 7 est connectée au second 19 module de traitement et le dispositif d'identification embarqué fonctionne en mode de communication passif.

Le commutateur 11 est commandé par un moyen de basculement 10.

Avantageusement, l'alimentation 8 du dispositif d'identification embarqué 1, selon l'un des modes de réalisation, possède une tension variable et peut commuter entre une première et une seconde tensions de sorte que la portée du champ magnétique émis varie en fonction de ces deux tensions. Chaque tension correspond à un type de communication défini. Cette variante est particulièrement avantageuse si l'alimentation, à savoir la batterie, peut délivrer une tension de 42 Volts.

Avantageusement également, le dispositif d'identification embarqué 1, selon l'un des modes de réalisation, comporte plusieurs antennes d'émission. Toutes les antennes d'émission sont sous tension lorsque le dispositif d'identification embarqué 1 échange des données selon un mode de communication actif avec une unité d'identification 2. Lorsque le dispositif bascule en mode de communication passif, une seule antenne d'émission 7 reste sous tension. Les autres antennes d'émission sont inhibées. Elles n'émettent aucun signal.

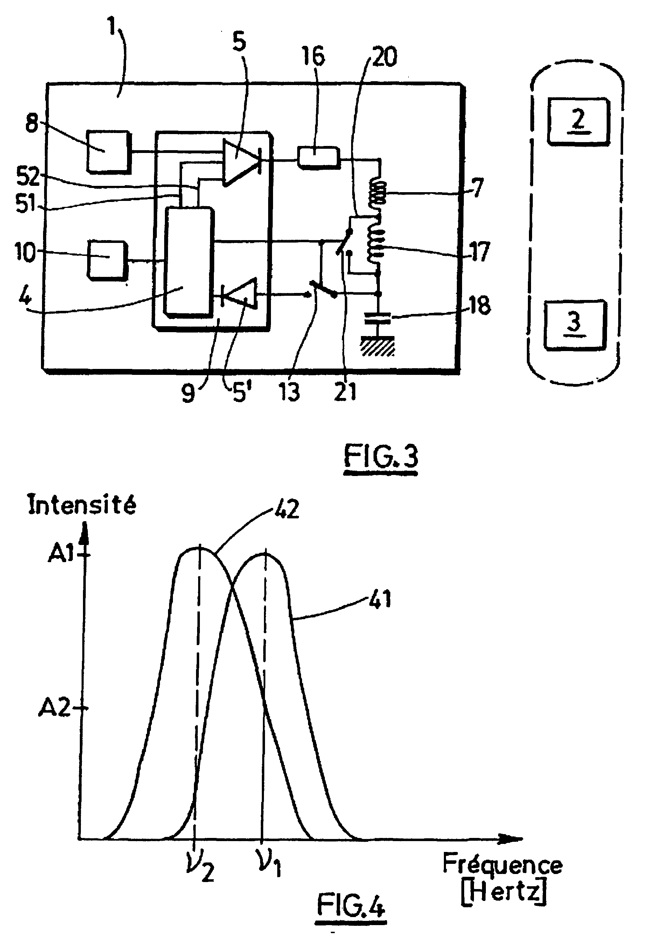

Selon un troisième mode de réalisation de l'invention représenté sur la figure 3, une première 7 et une deuxième antennes 17 sont disposées entre l'étage amplificateur 5 et la masse. Une connexion de dérivation 20 est prévue aux bornes de la deuxième antenne 17. Cette connexion de dérivation est munie d'un commutateur 21 commandé par le composant électronique 4.

En mode de communication actif, le commutateur 21 et l'interrupteur 13 sont ouverts. Les impulsions émises par l'étage amplificateur d'émission 5 traversent la résistance 16, les deux antennes 7 et 17 et le condensateur 18.

La figure 4 représente de façon schématique les courbes de variation de l'intensité traversant les antennes 7 et 17 en fonction de la fréquence d'émission des antennes. En particulier, la courbe 41 montre la fréquence de résonance $\nu_1$ des antennes 7 et 17.

Lorsque le moyen de basculement 10 bascule en mode de communication passif, le commutateur 21 et l'interrupteur 13 sont fermés. Les impulsions émises par l'étage amplificateur d'émission 5 traversent uniquement la première antenne 7. La courbe 42, représentée sur la figure 4, montre la fréquence de résonance $\nu_2$ de la première antenne 7.

Comme la fréquence de résonance est égale à

$$1/\sqrt{2\pi LC}$$ la fréquence de résonance $\nu_2$ du circuit comprenant une seule antenne est inférieure à la fréquence de résonance $\nu_1$ du même circuit lorsqu'il comporte deux antennes.

De plus, selon la présente invention, la fréquence de résonance de l'antenne du transpondeur 3 est égale à la fréquence de résonance $\nu_1$ du circuit comprenant deux antennes de sorte que seule l'amplitude A1 de l'intensité peut être réceptionnée par l'antenne du transpondeur 3.

Ainsi, l'amplitude de l'intensité traversant la bobine à la fréquence ? est plus faible en mode de communication passif qu'en mode de communication actif. En conséquence lors du passage du mode de communication actif en mode de communication passif, la portée du champ magnétique à la fréquence détectable par le transpondeur diminue.

Selon une variante de réalisation du troisième mode de réalisation (non représentée), les moyens d'adaptation électronique du dispositif d'identification embarqué comportent deux capacités et une connexion de dérivation de l'une des deux capacités commandée par le composant électronique 4.

Cette variante fonctionne selon le même principe que le troisième mode de réalisation à savoir par déplacement de la fréquence de résonance de l'antenne d'émission par dérivation de l'une des deux capacités.

Selon la présente invention, les différents modes de réalisation et leurs variantes peuvent également être combinés.

## Revendications

**1.** Système d'autorisation du démarrage d'un véhicule automobile comportant un dispositif d'identification embarqué (1) dans le véhicule apte à échanger des données d'identification d'une part, avec une unité d'identification (2) portée par un utilisateur selon un premier mode de communication mains-libres dit « actif », et d'autre part, avec un transpondeur (3) selon un second mode de communication de secours dit « passif », de manière à autoriser, dans l'un ou l'autre des modes, le démarrage, **caractérisé en ce que** le dispositif d'identification embarqué (1) comporte une antenne d'émission (7) desdites données d'identification commune aux premier et second modes, et des moyens d'adaptation électroniques (6, 9, 10 ; 9-11, 19) de l'antenne d'émission (7) pour permettre son fonctionnement selon le premier ou le second mode.

**2.** Système selon la revendication 1, **caractérisé en ce que** les moyens d'adaptation électroniques (6, 9, 10 ; 9-11, 19) sont aptes à faire varier l'intensité crête dans l'antenne d'émission (7), de manière à modifier la portée du champ magnétique émis en fonction du premier mode dit « actif» ou du second mode dit « passif ».

**3.** Système selon l'une des revendications 1 ou 2, **caractérisé en ce que** les moyens d'adaptation électroniques comportent au moins un premier module de traitement des données (9), ledit module de traitement des données comprenant un composant électronique (4) de fourniture des données d'identification et un étage amplificateur d'émission (5), ledit composant électronique (4) fournissant audit étage amplificateur d'émission (5) des données d'identification pour la communication selon le premier mode dit « actif » avec l'unité d'identification (2) et pour la communication selon le second mode de secours dit «passif» avec le transpondeur (3).

**4.** Système selon l'une des revendications 1 ou 2, **caractérisé en ce que** les moyens d'adaptation électroniques comportent un premier (9) et un second (19) modules de traitement des données fournissant à l'antenne d'émission (7) des données d'identification respectivement pour le premier mode dit «actif» avec l'unité d'identification (2) et pour le second mode dit « passif » avec le transpondeur (3), et un commutateur (11) disposé entre l'antenne d'émission (7) et le premier et le second modules de traitement de données.

**5.** Système selon la revendication 3, **caractérisé en ce que** les moyens d'adaptation électronique comportent une deuxième antenne d'émission (17) en série avec ladite antenne d'émission ; et une connexion (20) de dérivation disposée aux bornes de la deuxième antenne (17), ladite connexion (20) étant pourvue d'un commutateur (21) commandé par le composant électronique (4) pour basculer du premier mode dit « actif » dans lequel les deux antennes d'émission sont utilisées au second mode dit « passif» dans lequel seule ladite antenne d'émission est utilisée.

**6.** Système selon la revendication 3, **caractérisé en ce que** les moyens d'adaptation électronique comportent une première et une deuxième capacités disposées entre l'étage amplificateur d'émission et la masse ; et une connexion de dérivation disposée aux bornes de la deuxième capacité ; ladite connexion étant pourvue d'un commutateur commandé par le composant électronique pour basculer du premier mode dit « actif » au second mode dit « passif ».

**7.** Système selon l'une des revendications 1 à 3, **caractérisé en ce que** les moyens d'adaptation électroniques (9,6,10) comportent un élément à résistance variable (6) disposé entre l'étage amplificateur d'émission (5) et la masse pour faire varier l'intensité crête dans l'antenne d'émission (7).

**8.** Système selon l'une des revendications 1 à 3 et 7, **caractérisé en ce que** le module de traitement des données (9) est apte à faire varier le rapport cyclique de la tension d'alimentation de l'antenne d'émission (7) pour faire varier la portée du champ électromagnétique émis en fonction du mode de communication défini.

**9.** Système selon l'une des revendications précédentes, **caractérisé en ce que** le dispositif d'identification embarqué (1) comporte une alimentation en énergie (8) de l'antenne d'émission (7) possédant une tension variable et connectée aux moyens d'adaptation électroniques (9, 6,10), ladite alimentation pouvant commuter entre une première et une seconde tension pour faire varier la portée du champ électromagnétique émis en fonction du mode de communication défini.

10. Système selon l'une des revendications précédentes, **caractérisé en ce que** le dispositif d'identification embarqué comprend un moyen de basculement (10) de la communication entre le mode de communication actif et le mode de communication passif, le moyen de basculement étant apte à communiquer aux moyens d'adaptation électroniques (9, 6, 10, 17, 19, 21, 18, 28) le changement de mode de communication.

11. Système selon la combinaison des revendications 4 et 10, **caractérisé en ce que** le moyen de basculement est apte à actionner le commutateur (11).

12. Système selon la revendication 10, **caractérisé en ce que** le moyen de basculement (10) bascule de façon intermittente, sans action volontaire de l'utilisateur, du mode de communication actif au mode de communication passif.

13. Système selon la revendication 12, **caractérisé en ce que** le moyen de basculement (10) bascule en mode de communication passif après avoir envoyé de un à six messages en mode de communication actif.

14. Système selon la revendication 10, **caractérisé en ce que** le moyen de basculement (10) de la communication comporte un bouton de manoeuvre pouvant être actionné par l'utilisateur du véhicule.

15. Système selon la revendication 14, **caractérisé en ce que** le moyen de basculement (10) est le bouton de démarrage du véhicule.

16. Système selon la revendication 10, **caractérisé en ce que** le moyen de basculement (10) de la communication comporte un capteur de présence d'un objet au niveau d'un emplacement prédéfini et **en ce que** le dispositif d'identification embarqué bascule à un mode de communication passif lorsque la présence du transpondeur (3) est détectée.

17. Système selon la revendication 16, **caractérisé en ce que** l'étendue de la zone de détection dudit capteur de présence est sensiblement confondue avec la portée d'émission de l'antenne d'émission (7) émettant en mode de communication passif de sorte que le dispositif d'identification embarqué ne bascule à une communication passive que lorsqu'un objet est disposé au niveau de l'emplacement prédéfini.

18. Système selon l'une des revendications 16 ou 17, **caractérisé en ce que** le capteur de présence est disposé à proximité de l'antenne d'émission (7).

19. Système selon l'une des revendications 16 à 18, **caractérisé en ce que** l'antenne d'émission (7) et/ou le capteur de présence sont positionnés au niveau de la colonne de direction d'un véhicule automobile.

20. Système selon l'une des revendications 16 à 18, **caractérisé en ce que** l'antenne d'émission (7) et/ou le capteur de présence sont positionnés au niveau d'une console centrale d'un véhicule automobile.

21. Système selon l'une des revendications précédentes, **caractérisé en ce que** l'unité d'identification (2) et le transpondeur (3) sont logés dans un support unique (12).

22. Système selon l'une des revendications précédentes, **caractérisé en ce que** le dispositif d'identification embarqué comporte au moins deux antennes d'émission et **en ce que**, en mode de communication passif, une seule antenne d'émission (7) est sous tension, les autres antennes étant inhibées.

**Claims**

1. System to authorise starting up of an automobile vehicle comprising an onboard identification device (1) in the vehicle capable of exchanging firstly identification data with an identification unit (2) carried by a user according to a first so-called "active" hands off communication mode, and secondly with a transponder (3) according to a second so-called "passive" standby communication mode so as to authorise starting in one of the two modes, **characterised in that** the onboard identification device (1) comprises an emission antenna (7) emitting the said identification data common to the first and second modes, and electronic matching means (6, 9, 10; 9 - 11, 19) of the emission antenna (7) to enable operation according to the first or the second mode.

2. System according to claim 1, **characterised in that** the electronic matching means (6, 9, 10; 9 - 11, 19) are capable of varying the peak intensity in the emission antenna (7) so as to modify the range of the emitted magnetic field as a function of the first so-called "active" mode or the second so-called "passive" mode.

3. System according to either of claims 1 and 2, **characterised in that** the electronic matching means comprise at least one first data processing module (9), the said data processing module comprising an electronic component (4) supplying identification data and an emission amplifier stage (5), the said electronic component (4) supplying the said emission amplifier stage (5) with identification data for communication according to the first so-called "active" mode with the identification unit (2), and for communication according to the second so-called "passive" standby mode with the transponder (3).

4. System according to either of claims 1 and 2, **characterised in that** the electronic matching means comprise a first data processing module(9) and a second data processing module (19) supplying identification data to the emission antenna (7) for the first so-called "active" mode with the identification unit (2) and for the second so-called "passive" mode with the transponder (3), and a switch (11) placed between the emission antenna (7) and the first and second data processing modules.

5. System according to claim 3, **characterised in that** the electronic matching means comprise a second emission antenna (17) in series with the said emission antenna; and a connection (20) arranged at the terminals of the second antenna (17), the said connection (20) being provided with a switch (21) controlled by the electronic component (4) to switch from the first so-called "active" mode in which the two emission antennas are used to the second so-called "passive" mode in which only the said emission antenna is used.

6. System according to claim 3, **characterised in that** the electronic matching means comprise a first and second capacitance arranged between the emission amplifier stage and the ground; and a branch connection arranged at the terminals of the second capacitance; the said connection being provided with a switch controlled by the electronic component to switch from the first so-called "active" mode to the second so-called "passive" mode.

7. System according to one of claims 1 to 3, **characterised in that** the electronic matching means (9, 6, 10) comprise an element with a variable resistance (6) placed between the emission amplifier stage (5) and the ground to vary the peak intensity in the emission antenna (7).

8. System according to one of claims 1 to 3 and 7, **characterised in that** the data processing module (9) can vary the cyclic ratio of the power supply voltage of the emission antenna (7) to vary the range of the electromagnetic field emitted as a function of the defined communication mode.

9. System according to one of the previous claims, **characterised in that** the onboard identification device (1) comprises a power supply (8) for the emission antenna (7) with a variable voltage and connected to the electronic matching means (9, 6, 10), the said power supply being capable of switching between a first and a second voltage to vary the range of the electromagnetic field emitted as a function of the defined communication mode.

10. System according to one of the previous claims, **characterised in that** the onboard identification device comprises a switching means (10) for switching the communication between the active communication mode and the passive communication mode, the switching means being capable of communicating the change in the communication mode to the electronic matching means (9, 6, 10, 17, 19, 21, 18, 28).

11. System according to claims 4 and 10 combined, **characterised in that** the switching means is capable of activating the switch (11).

12. System according to claim 10, **characterised in that** the switching means (10) intermittently switches from active communication mode to passive communication mode, without any deliberate action by the user.

13. System according to claim 12, **characterised in that** the switching means (10) switches to passive communication mode after sending one to six messages in active communication mode.

14. System according to claim 10, **characterised in that** the communication switching means (10) comprises a manoeuvring button that the user of the vehicle can activate.

15. System according to claim 14, **characterised in that** the switching means (10) is the vehicle start button.

16. System according to claim 10, **characterised in that** the switching means (10) of the communication comprises a presence sensor of an object at a predefined location and **in that** the onboard identification device changes over to a passive communication mode when the presence of the transponder (3) is detected.

17. System according to claim 16, **characterised in that** the extent of the detection zone of the said presence sensor is practically coincident with the emission range of the emission antenna (7) emitting in passive communication mode such that the onboard identification device does not change to passive communication except when an object is placed at the predefined location.

**18.** System according to either of claims 16 and 17, **characterised in that** the presence sensor is arranged close to the emission antenna (7).

**19.** System according to one of claims 16 to 18, **characterised in that** the emission antenna (7) and / or the presence sensor are located on the steering column of an automobile vehicle.

**20.** System according to one of claims 16 to 18, **characterised in that** the emission antenna (7) and / or the presence sensor are located on a central console in an automobile vehicle.

**21.** System according to one of the previous claims, **characterised in that** the identification unit (2) and the transponder (3) are housed in a single support (12).

**22.** System according to one of the previous claims, **characterised in that** the onboard identification device comprises at least two emission antennas and **in that** only one emission antenna (7) is powered in passive communication mode, with the other antennas remaining disabled.

**Patentansprüche**

**1.** Startberechtigungssystem eines Kraftfahrzeuges, das eine in dem Fahrzeug angeordnete Zugangs-Identifizierungseinrichtung (1) enthält, welche in der Lage ist, Identifizierungsdaten auszutauschen, einerseits mit einer von einem Benutzer getragenen Identifizierungseinheit (2), entsprechend einem ersten als "aktiv" bezeichneten freihändigen Betriebsmodus, und andererseits mit einem Transponder (3), entsprechend einem zweiten als "passiv" bezeichneten Hilfs-Betriebsmodus, um in dem einen oder anderen Modus den Startvorgang zuzulassen, **dadurch gekennzeichnet, daß** die Zugangs-Identifizierungseinrichtung (1) eine Antenne (7) zum Ausstrahlen der besagten Identifizierungsdaten sowohl im Falle des ersten als auch im Falle des zweiten Betriebsmodus umfaßt, und Mittel zur elektronischen Ansteuerung (6, 9, 10; 9-11, 19) der Sendeantenne (7) aufweist, um ihren Betrieb entsprechend dem ersten oder zweiten Modus zu gestatten.

**2.** System nach Anspruch 1, **dadurch gekennzeichnet, daß** die Mittel zur elektronischen Ansteuerung (6, 9, 10; 9-11, 19) in der Lage sind, die maximal an der Sendeantenne (7) liegende Intensität zu verändern, um die Reichweite des ausgestrahlten magnetischen Feldes als Funktion des ersten als "aktiv" bezeichneten Modus oder des zweiten als "passiv" bezeichneten Modus zu verändern.

**3.** System nach einem der Ansprüche 1 oder 2, **dadurch gekennzeichnet, daß** die Mittel zur elektronischen Ansteuerung mindestens ein erstes Datenverarbeitungsmodul (9) umfassen, daß das besagte Datenverarbeitungsmodul ein elektronisches Bauteil (4) zur Bereitstellung der Identifikationsdaten und eine Sender-Verstärkerstufe (5) enthält, daß das besagte elektronische Bauteil (4) der besagten Sender-Verstärkerstufe (5) die Identifikationsdaten liefert für die Verbindung mit der Identifizierungseinheit (2), entsprechend dem ersten, als "aktiv" bezeichneten Modus, und für die Verbindung mit dem Transponder (3), entsprechend dem zweiten, als "passiv" bezeichneten Hilfsmodus.

**4.** System nach einem der Ansprüche 1 oder 2, **dadurch gekennzeichnet, daß** die Mittel zur elektronischen Ansteuerung ein erstes und ein zweites Datenverarbeitungsmodul (9, 19) umfassen, die an die Sendeantenne (7) entsprechende Identifikationsdaten liefern, und zwar in dem ersten, mit "aktiv" bezeichneten Modus für die Identifizierungseinheit (2) und in dem zweiten, mit "passiv" bezeichneten Modus für den Transponder (3), sowie einen Umschalter (11) enthalten, der zwischen der Sendeantenne (7) und dem ersten und dem zweiten Datenverarbeitungsmodul angeordnet ist.

**5.** System nach Anspruch 3, **dadurch gekennzeichnet, daß** die Mittel zur elektronischen Ansteuerung eine zweite Sendeantenne (17), die in Serie mit der besagten Sendeantenne geschaltet ist, und eine zwischen den Anschlüssen der zweiten Antenne (17) angeordnete Kurzschlußverbindung (20) aufweisen, wobei die besagte Verbindung (20) mit einem Umschalter (21) versehen ist, der durch das elektronische Bauteil (4) betätigbar ist, um von dem als "aktiv" bezeichneten ersten Modus, bei dem zwei Sendeantennen benutzt werden, in den als "passiv" bezeichneten zweiten Modus überzugehen, bei dem nur die besagte Sendeantenne benutzt wird.

**6.** System gemäß Anspruch 3, **dadurch gekennzeichnet, daß** die Mittel zur elektronischen Ansteuerung eine erste und eine zweite Kapazität enthalten, die zwischen der Sender-Verstärkerstufe und der Masse angeordnet sind, und eine zwischen den Anschlüssen der zweiten Kapazität angeordnete Kurzschlußverbindung aufweisen, wobei die besagte Verbindung mit einem Umschalter versehen ist, der durch das elektronische Bauteil betätigbar ist, um von dem als "aktiv" bezeichneten ersten Modus in den als "passiv" bezeichneten zweiten Modus überzugehen.

**7.** System nach einem der Ansprüche 1 bis 3, **dadurch gekennzeichnet, daß** die Mittel zur elektronischen Ansteuerung (9, 6, 10) ein variables Widerstandselement (6) enthalten, welches zwischen der Sender-Verstärkerstufe (5) und der Masse angeordnet ist, um die maximale Intensität der Senderantenne (7) zu verändern.

8. System nach einem der Ansprüche 1 bis 3 und 7, **dadurch gekennzeichnet, daß** das Datenverarbeitungsmodul (9) in der Lage ist, die Versorgungsspannung der Sendeantenne (7) zyklisch zu verändern, um die Reichweite des ausgesandten elektromagnetischen Feldes in Abhängigkeit von dem vorgegebenen Betriebsmodus zu verändern.

9. System nach einem der vorhergehenden Ansprüche, **dadurch gekennzeichnet, daß** die Zugangs-Identifizierungseinrichtung (1) eine Energieversorgung (8) für die Sendeantenne (7) mit einer veränderbaren Spannung aufweist und mit Mitteln zur elektronischen Ansteuerung (9, 6, 10) verbunden ist, wobei sich die Spannung der besagten Versorgung zwischen einer ersten und einer zweiten Spannung ändern kann, um die Reichweite des ausgesandten elektromagnetischen Feldes in Abhängigkeit des vorgegebenen Betriebsmodus zu verändern.

10. System nach einem der vorhergehenden Ansprüche, **dadurch gekennzeichnet, daß** die Zugangs-Identifizierungseinrichtung ein Umschaltmittel (10) zur Umschaltung zwischen dem aktiven Betriebsmodus und dem passiven Betriebsmodus umfaßt, wobei das Umschaltmittel in der Lage ist, den Wechsel des Betriebsmodus auf die Mittel zur elektronischen Ansteuerung (9, 6, 10, 17, 19, 21, 18, 28) zu übertragen.

11. System gemäß einer Kombination der Ansprüche 4 und 10, **dadurch gekennzeichnet, daß** das Umschaltmittel in der Lage ist, den Umschalter (11) zu betätigen.

12. System nach Anspruch 10, **dadurch gekennzeichnet, daß** das Umschaltmittel (10) ohne bewußte Betätigung des Benutzers intermittierend von dem aktiven Betriebsmodus in den passiven Betriebsmodus übergeht.

13. System nach Anspruch 12, **dadurch gekennzeichnet, daß** das Umschaltmittel (10) in den passiven Betriebsmodus umschaltet, nachdem eine bis sechs Meldungen im aktiven Betriebsmodus ausgesandt wurden.

14. System nach Anspruch 10, **dadurch gekennzeichnet, daß** das Betriebs-Umschaltmittel (10) einen durch den Benutzer des Fahrzeuges betätigbaren Betätigungsknopf enthält.

15. System nach Anspruch 14, **dadurch gekennzeich-**

net, daß es sich bei dem Umschaltmittel (10) um den Starterknopf des Fahrzeuges handelt.

16. System nach Anspruch 10, **dadurch gekennzeichnet, daß** das Betriebs-Umschaltmittel (10) einen Sensor zur Ermittlung der Anwesenheit eines Objektes im Bereich eines vordefinierten Ortes enthält und daß die Zugangs-Identifizierungseinrichtung in einen passiven Betriebsmodus umschaltet, wenn die Anwesenheit des Transponders (3) detektiert wird.

17. System nach Anspruch 16, **dadurch gekennzeichnet, daß** die Ausdehnung des Erfassungsbereiches des besagten Anwesenheitssensors und der Bereich der Ausstrahlung der Sendeantenne (7) im passiven Betriebsmodus sich im wesentlichen überdecken, so daß die Zugangs-Identifizierungseinrichtung nur dann in einen passiven Betrieb umschaltet, wenn sich ein Objekt im Bereich des vordefinierten Ortes befindet.

18. System nach einem der Ansprüche 16 oder 17, **dadurch gekennzeichnet, daß** der Anwesenheitssensor in der Nähe der Sendeantenne (7) angeordnet ist.

19. System nach einem der Ansprüche 16 bis 18, **dadurch gekennzeichnet, daß** die Sendeantenne (7) und/oder der Anwesenheitssensor im Bereich der Lenksäule eines Kraftfahrzeuges angeordnet sind.

20. System nach einem der Ansprüche 16 bis 18, **dadurch gekennzeichnet, daß** die Sendeantenne (7) und/oder der Anwesenheitssensor im Bereich einer zentralen Konsole des Kraftfahrzeuges angeordnet sind.

21. System nach einem der vorhergehenden Ansprüche, **dadurch gekennzeichnet, daß** die Identifizierungseinheit (2) und der Transponder (3) in dem gleichen Gehäuse (12) angeordnet sind.

22. System nach einem der vorhergehenden Ansprüche, **dadurch gekennzeichnet, daß** die Zugangs-Identifizierungseinrichtung mindestens zwei Sendeantennen umfaßt und daß im passiven Betriebsmodus nur eine einzige Sendeantenne (7) durch eine Spannung beaufschlagt ist und die Ausstrahlung der anderen Antenne unterdrückt wird.

**FIG.1**

FIG.2

FIG.3

FIG.4